# EUROPEAN PATENT SPECIFICATION

(11) **EP 4 042 100 B1**
(45) Date of publication and mention of the grant of the patent: **27.08.2025**
(21) Application number: 20804669.8
(22) Date of filing: 02.10.2020
(51) Int. Cl.: G01B 11/16, G01B 5/00, G01L 1/24, G01M 5/00, G01L 9/00

(54) **DEVICE AND METHOD FOR MEASURING A THREE-DIMENSIONAL SHAPE OF A STRUCTURE, IN PARTICULAR A WIND TURBINE BLADE**
VORRICHTUNG UND VERFAHREN ZUM MESSEN EINER DREIDIMENSIONALEN FORM EINER STRUKTUR, INSBESONDERE EINER WINDTURBINENSCHAUFEL
DISPOSITIF ET PROCÉDÉ DE MESURE DE LA FORME TRIDIMENSIONNELLE D'UNE STRUCTURE, EN PARTICULIER UNE PALE D'ÉOLIENNE

(30) Priority: 02.10.2019 PT 2019115813
(43) Date of publication of application: 17.08.2022
(73) Proprietor: Fibersail Holding BV, 1013 BV Amsterdam (NL)
(72) Inventor: MOURA PINTO, Pedro, 8500-555 Portimão (PT); MARQUES DE QUEIRÓS FERREIRA, Pedro Gil, 4400-478 Vila Nova de Gaia (PT); VAZ RODRIGUES, António, 4250-094 Porto (PT)
(74) Representative: Patentree
(86) International application number: PCT/IB2020/059285
(87) International publication number: WO 2021/064685

(56) References cited:
- US-A1- 2004 114 850
- US-A1- 2008 212 082
- US-A1- 2009 217 769
- US-A1- 2011 135 476

## Description

### TECHNICAL FIELD

The present disclosure relates to the field of measuring three-dimensional shapes of 3D structures, in particular wind turbine structures like wind turbine blades, using optical fibre strain sensors, namely Fibre Bragg Gratings, FBGs.

### BACKGROUND

In the field of measuring 3D shapes using optical fibre strain sensors, namely Fibre Bragg Gratings, there are insufficiencies that the present disclosure addresses. In particular, there are problems relating to shape sensing systems based on FBGs.

The known shape sensing systems are based on multicore arrays of normally 3 cores. The distance between the cores are of microns which means that are not suitable for accuracy along long lengths.

Other known systems use hundreds or thousands FBGs to measure the shape of a small length structure, which means a very costly system with no general commercial application, with the exception of medical research.

The inherent round design of the fibre optic does not allow for the measurement of torsion unless it is bonded to the structure itself, and in that case to measure the shape it is then required the knowledge of the design of the original structure.

US 2009/217769 A1 relates to shape measurement of a structure using a pliant beam having four fibres with FBG strain sensors embedded therein wherein the fibres have a transversal distance between them in at least two different transversal directions.

In particular, there are also problems relating to shape sensing systems based on FBGs embedded on wind turbine blades.

The use of FBGs embedded on blades has more than 20 years, but its reliability comes under question, due to high stresses of the blades, need for calibration, temperature compensation and design of original blade in order to measure reliable strains. Another issue is that huge composite structures are likely to be different from each other due to manufacturing processes and this affects the quality of measurement.

These reasons can explain that strain sensing on large structures is quite used on research and prototype testing, but not much used on the actual long-term control structures, in particular wind turbine structures due to the lack of reliability from the acquired data and devices.

These facts are disclosed in order to illustrate the technical problem addressed by the present disclosure.

### GENERAL DESCRIPTION

The invention is defined by a device for measuring a three-dimensional shape of a structure by being slidably coupled to the structure such that the deformation of the structure, except lengthening or shortening, causes a corresponding deformation of the device as defined in claims 1-7, the wind turbine blade or wind turbine tower comprising the device as defined in claims 8-9 and a method for measuring a three-dimensional shape of a structure by using the device as defined in claims 10-13.

The present disclosure relates to the field of measuring three-dimensional shapes of 3D structures, in particular wind turbine structures like wind turbine blades, using optical fibre strain sensors, namely Fibre Bragg Gratings, FBGs.

The present disclosure includes a self-contained 3D shape sensing device and respective operation method comprising three or more single-core parallel optical arrays of FBGs embedded in a discrete composite structure with a predetermined profile, for example a rectangular pliant beam, for measuring the shape and deflection of structures such as wind turbine blades, advantageously without experiencing structural stresses, and without needing to know the exact design and profile of the blade to measure its deformation.

The present disclosure also includes a self-contained shape sensing device method and apparatus based on two or more single-core parallel optical arrays of FBGs embedded in a discrete composite profile for measuring the shape and deflection along the length of a wind turbine blade, advantageously without experiencing stresses from the blade, and having the possibility of being removed and refitted again, being a discrete and independent relative to the structure to be measured.

The device of the present disclosure is thus capable of measuring the original shape and consequent deflections of a wind turbine blade in terms of flapwise, edgewise or torsion. The device of the present disclosure is also capable measuring the original shape and deflection of a structure without knowing its design profile or material. The fibre optic device of the present disclosure is also capable of measuring a precise shape immune to temperature changes.

Advantageously, the measurement device of the present disclosure can be mounted, unmounted and refitted again in the same or a different placement.

Advantageously, the fibre optic device of the present disclosure is capable of measuring shape and deflection of a structure, e.g. a wind turbine blade, without experiencing stresses from the structure, wind turbine blade.

Advantageously, the fibre optic device of the present disclosure is capable of measuring three-dimensional shape of very large structures, for example 150-meter blades, with a reduced number of sensors and sections (for example, 5 to 20) and improved long-term stress resistance, without impairing measurement precision.

Advantageously, the fibre optic device of the present disclosure for measuring shape and deflection can be mounted inside or outside of a wind turbine blade.

The device of the present disclosure can be thus be used to reliably compare the structural behaviour of different blades.

The device of the present disclosure is precise and reliable enough to provide information to control a wind turbine in terms of pitch and yaw controls.

The shape sensor device of the present disclosure can be manufactured on one facility and easily mounted or refitted on a blade in other location, being easily transported when rolled.

The device of the present disclosure includes the following advantages:
Measure the precise shape without being fully fixed or bonded to the structure
No need to know the profile design to measure the shape
Use of a very reduced number of sensors vs the length of the structure to be measured
It allows for the unmounting and refitting of the same shape system
It is immune to temperature changes
No need for on-site calibration
100-meter shape sensors can be easily rolled and shipped in boxes
A shape sensing system to measure accurately the deflection of the entire length of a blade with a relatively low cost.
No need for special integration on the structure or blade.
Dispenses with gluing fibre optic sensors to the structure or blade.

It is disclosed a device according to claim 1 for measuring a three-dimensional shape of a structure by being slidably coupled to the structure such that the deformation of the structure, except lengthening or shortening, causes a corresponding deformation of the device, comprising:
a pliant beam;
three or more optical fibres arranged lengthwise in parallel within said beam and having a transversal distance between said fibres in at least two different transversal directions;
means for slidably coupling the beam to the structure to be measured;
wherein said optical fibres comprise a plurality of sensor regions distributed along said optical fibres,
wherein each said sensor region comprises a Fibre Bragg Grating in each of the optical fibres.

An embodiment comprises one or more slidable fittings for slidably coupling the beam to the structure to be measured.

An embodiment comprises a conduit for rigidly mounting onto the structure to be measured, wherein the beam is slidably mounted inside the conduit.

In an embodiment, the beam has a rectangular or quadrangular cross-section and device comprises four said optical fibres arranged in parallel within said beam forming a rectangle-shaped or a square-shaped optical fibre cross-section.

In an embodiment, the device comprises three said optical fibres arranged in parallel within said beam to sense deflection of the beam along a first direction, deflection of the beam along a second direction perpendicular to the first direction, and temperature.

In an embodiment, the device comprises four said optical fibres arranged in parallel within said beam to sense deflection of the beam along a first direction, deflection of the beam along a second direction perpendicular to the first direction, torsion of the beam, and temperature.

It is also disclosed a wind turbine blade or wind turbine tower comprising the device according to any of the disclosed embodiments.

In an embodiment, the device is installed inside the blade or mounted outside the blade, in particular on the trailing edge.

In an embodiment, the pliant beam comprises a plurality of parallel recesses along the length of the pliant beam.

The recesses are located at the external upper and lower surfaces of the pliant beam to embed the optical sensors and the optical fibres. With these recesses, the optical fibres and in particular the optical sensors are only affected by the shape or deflection or torsion of the pliant beam and not by other stresses external to the beam, when said beam is applied on the structure. Preferably, the optical fibre is embedded in a recess at a predetermined depth such that the optical fibre is not flush with the beam surface, in order to better protect the optical fibre from external stresses or pressures. Advantageously, the optical fibre is embedded in the recess and fixed using an adhesive, preferably an adhesive resin, more preferably an epoxy resin.

It is also disclosed a method according to claim 10 for measuring a three-dimensional shape of a structure by using a device slidably coupled to the structure such that the deformation of the structure, except lengthening or shortening, causes a corresponding deformation of the device, the device comprising:
a pliant beam;
three or more optical fibres arranged lengthwise in parallel within said beam and having a transversal distance between said fibres in at least two different transversal directions;
means for slidably coupling the beam to the structure to be measured;
wherein said optical fibres comprise a plurality of sensor regions distributed along said optical fibres,
wherein each said sensor region comprises a Fibre Bragg Grating in each of the optical fibres;
the method comprising the steps of:
   determining the amounts of deflection, or deflection and torsion, in each said sensor region;
   extrapolating the three-dimensional shape of the beam from the determined amounts;
   using the extrapolated three-dimensional shape as the measured three-dimensional shape of the structure.

An embodiment of the disclosed method comprises the previous application of one or more slidable fittings to the structure for slidably coupling the beam to the structure to be measured.

An embodiment of the disclosed method comprises the previous rigidly mounting of a conduit onto the structure to be measured, wherein the beam is subsequently slidably arranged inside the conduit.

In an embodiment, the device comprises three said optical fibres arranged in parallel within said beam, and the method comprises determining deflection of the beam along a first direction, deflection of the beam along a second direction perpendicular to the first direction, and temperature.

In an embodiment, the device comprises four said optical fibres arranged in parallel within said beam, and the method comprises determining deflection of the beam along a first direction, deflection of the beam along a second direction perpendicular to the first direction, torsion of the beam, and temperature.

In an embodiment of the method, the device is previously installed inside the blade or mounted outside the blade, in particular on the blade trailing edge.

The beam may be made in polymer or may also be made from a composite material like a polymer base comprising embedded fibres, such as a glass-fibre based composite, for example using a polyvinyl-based polymer.

As an illustrative example not part of the claimed scope, it is also disclosed a computer-implemented method for measuring a three-dimensional shape of a structure, using data obtained from a device slidably coupled to the structure such that the deformation of the structure, except lengthening or shortening, causes a corresponding deformation of the device, the device comprising:
a pliant beam;
three or more optical fibres arranged lengthwise in parallel within said beam and having a transversal distance between said fibres in at least two different transversal directions;
wherein said optical fibres comprise a plurality of sensor regions distributed along said optical fibres,
wherein each said sensor region comprises a Fibre Bragg Grating in each of the optical fibres;
wherein the method comprises carrying out the following steps by an electronic data processor:
   determining the amounts of deflection, or deflection and torsion, in each said sensor region from readings of said Fibre Bragg Gratings;
   extrapolating the three-dimensional shape of the beam from the determined amounts;
   using the extrapolated three-dimensional shape as the measured three-dimensional shape of the structure.

As an illustrative example not part of the claimed scope, it is also disclosed a non-transitory storage media including program instructions for implementing a method for measuring a three-dimensional shape of a structure, the program instructions including instructions executable by a data processor to carry out the method of any of the disclosed embodiments.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of the composition of a shape sensor device.
**Figure 2****:** Schematic representation of the principle used in embodiments of the disclosure being the difference of strain measurements.
**Figure 3****:** Schematic representation of a fibre optic array according to the disclosure.
**Figure 4****:** Schematic representation of the difference of strains find in each array depending on type of bending, torsion or temperature.
**Figure 5****:** Schematic representation of sliding sensor device applied to a structure.
**Figure 6****:** Schematic representation of different detection profiles with embedded arrays of FBGs according to embodiments of the disclosure.
**Figure 7****:** Schematic representation of the location of shape sensor installation on a wind turbine blade according to an embodiment of the disclosure.
**Figure 8****:** Schematic representation of a possible fixation of shape sensor device according to an embodiment of the disclosure.
**Figure 9****:** Schematic representation of a possible fixation means of the shape sensor device according to an embodiment of the disclosure.
**Figure 10****:** Schematic representation of an embodiment of the pliant beam comprising a plurality of recesses for receiving a fibre optic.

### DETAILED DESCRIPTION

The present disclosure relates to the field of measuring three-dimensional shapes of 3D structures, in particular wind turbine structures like wind turbine blades, using optical fibre strain sensors, namely Fibre Bragg Gratings, FBGs.

The present disclosure relates to a system comprised of a composite beam acting as a base layer with 2 or more arrays of parallel FBGs embedded along the composite beam.

In an embodiment, the beam can be between 1 to 200 meters with 5 to +20 sensorized sections.

In an embodiment, the device is fixed to the structure to precisely replicate the same shape of the structure onto the beam and then we can just measure the shape of the beam using the embedded FBGs.

In an embodiment, the beam shall be fixed on one of the ends and free on the rest, so that the beam does not experience the stresses of the structure when deflecting.

In an embodiment, the beam is arranged to slide through fixation pieces that are fixed to the structure.

In an embodiment, the shape sensor can be applied to the interior of the blade or on the outside of an existing blade.

In an embodiment, when the beam deflects, the FBGs on one of the sides will experience more strain then the FBGs on the other side, and the difference of strains is used to measure the curvature on each section. The knowledge of the composition and design of the beam allows for the extrapolation of shape for the rest of the beam between sections.

In an embodiment, the disclosure allows for the re-use of the same shape sensor device in different structures, and it allows the re-fitting on the same position, if needed.

In an embodiment, the use of 3 or 4 parallel arrays allows for the measurement of flapwise, edgewise deflection, torsion and with temperature compensation.

According to the invention, by not being fixed or bonded to the structure, but free to move on one of the ends, allows the beam not to experience the stresses from the structure, only experiencing the shape and deflection.

In an embodiment, the higher the transversal distance between arrays and respective FBGs allows for a higher accuracy in terms of shape and deflection.

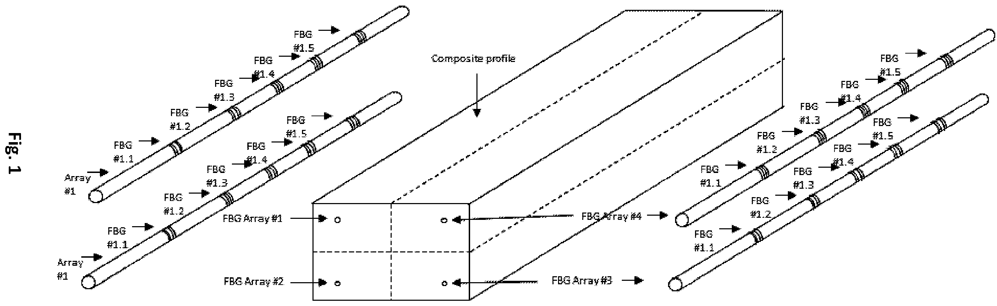

In an embodiment, the sensor of **Figure 1** comprises a composite beam and 3 or more parallel arrays of Fibre Bragg Gratings. In an embodiment, the rectangular shape of the beam allows for torsion measurements and a higher precision on the edgewise as needed, along with the possibility to roll up to be transported on a container.

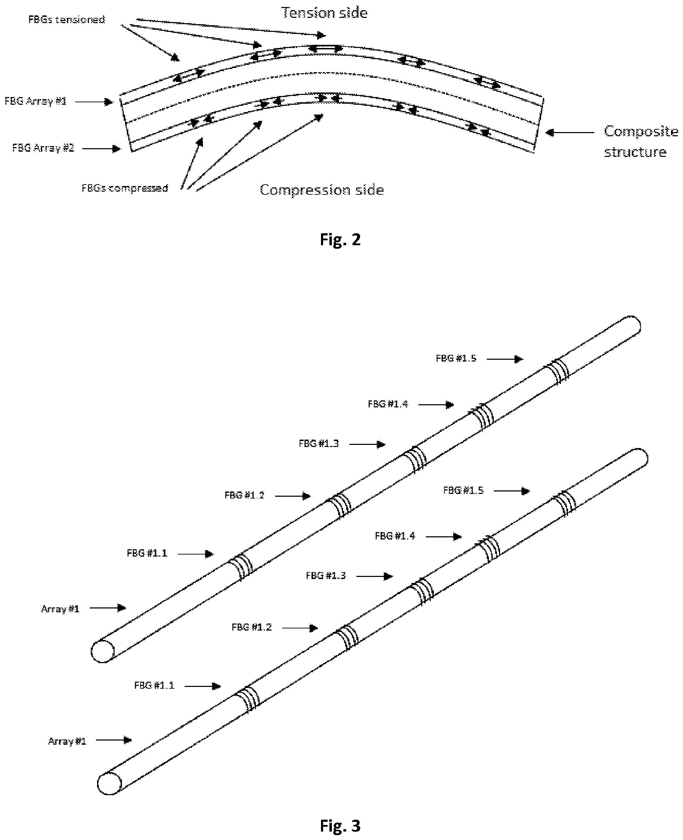

In an embodiment, **Figure 2** shows that a principle used is the difference of strains between the parallel arrays to calculate the curvature in each section. While one side is strained, the opposite is compressed.

In an embodiment, **Figure 3** shows that fibre Optic array containing 5 FBGs or more to measure the shape and curvature along the length of a wind turbine blade. In an embodiment, the number of sections used is based on the expected curvature and blade design.

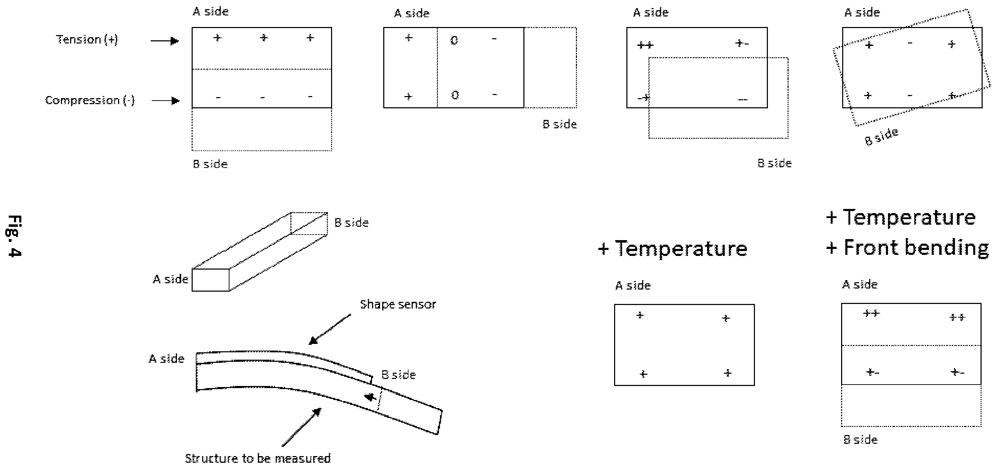

In an embodiment, **Figure 4** shows difference of strains find in each array depending on type of bending, torsion or temperature. This shows how to calculate each measurement for shape sensing works. The use of the beam allows a greater distance between sensors and is advantageous in the use of a rectangular beam with 4 single mode arrays instead of multicore fibres with 3 gratings in each section around a circular core.

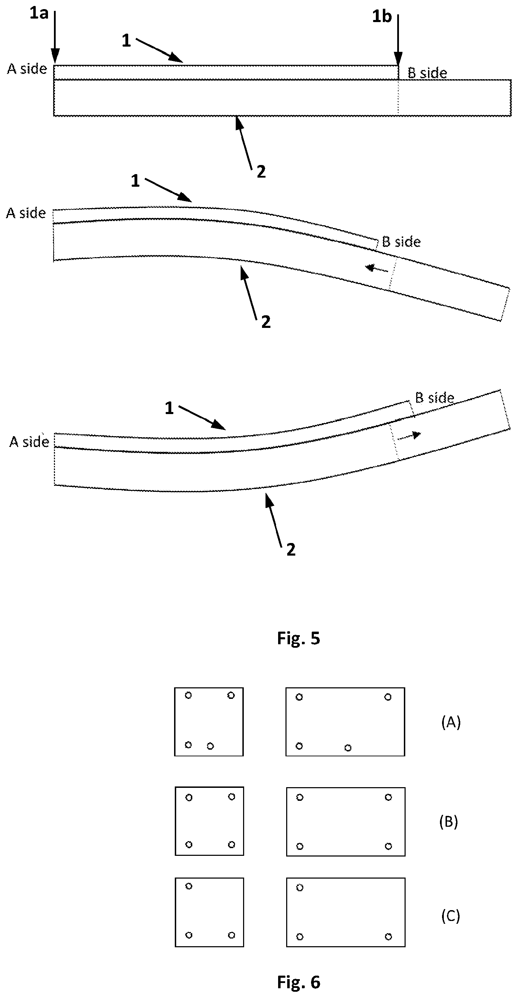

In an embodiment, **Figure 5** shows a sliding sensor **1** device applied to a structure or blade **2.** The fixing pieces **1a** and the free pieces **1b** allow the shape sensor to slide during the bending of the structure, allowing the sensor to keep always the same length and experience reduced strains when compared to strains of the structure. This allows for the measurement of curvature without experiencing excessive strains. This process allows for the shape, curvature and deformation measurement of a structure without needing to know the design and specific profile of it, something critical for example for wind turbine blades.

In an embodiment, **Figure 6** shows different section profiles with embedded arrays of FBGs according to the disclosure. **A** shows a profile to measure 3D (flapwise and edgewise and torsion) and temperature compensation. **B** represents a profile to measure 3D (flapwise and edgewise) and temperature compensation with more precision. **C** represents a profile to measure 3D (flapwise and edgewise) and temperature compensation.

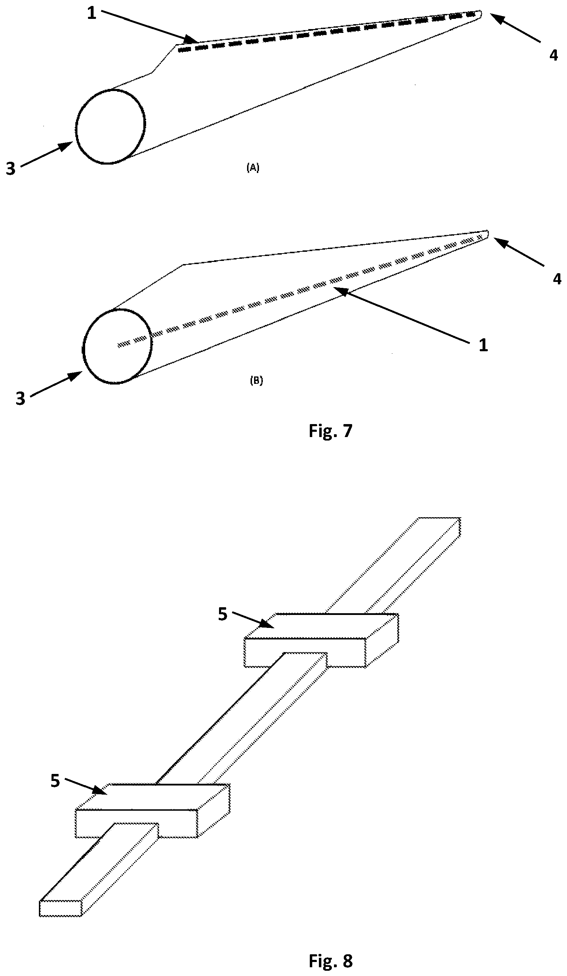

In an embodiment, **Figure 7** shows location of shape sensor **1** installation on a blade. The shape sensor can be mounted on the inside of the blade **A,** or in its outside **B,** by the trailing edge, in order for example not to disrupt the aerodynamic flow. Furthermore, in this figure, it is shown the root **3** and the tip **4** of the blade.

**Figure 8** shows a schematic representation of a possible fixation of shape sensor device according to an embodiment of the disclosure, where **5** are the fixing points.

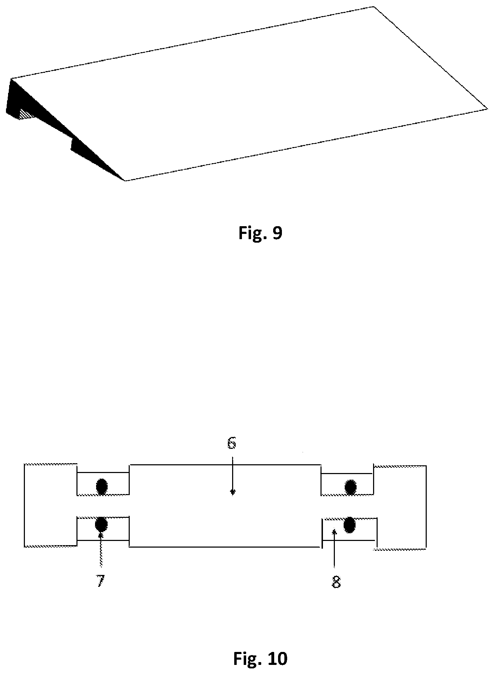

**Figure 9** shows a schematic representation of a possible fixation means of the shape sensor device according to an embodiment of the disclosure.

In an embodiment, **Figure 10****,** the pliant beam **6** comprises a plurality of parallel recesses along the length of the pliant beam. The recesses are located at the external upper and lower surfaces of the pliant beam to embed the optical sensors and the fibres **7.** With these recesses, the optical sensors are only affected by the shape or deflection or torsion of the pliant beam and not by other external stresses when said beam is applied on the structure. The optical sensors can be glued or another fixation element **8** can be used.

In preferred embodiment, the number of recesses are 2 or more for the measurement of the shape and deflection in two dimensional shapes structure.

In an embodiment, the recesses are 3 or more for the measurement of the torsion in three dimensional shapes.

The term "comprising" whenever used in this document is intended to indicate the presence of stated features, integers, steps, components, but not to preclude the presence or addition of one or more other features, integers, steps, components or groups thereof.

The above described embodiments are combinable.

The following claims further set out particular embodiments of the disclosure.

## Claims

1. Device for measuring a three-dimensional shape of a structure by being slidably coupled to the structure such that the deformation of the structure, except lengthening or shortening, causes a corresponding deformation of the device, comprising:
a pliant beam (6);
three or more optical fibres (7) arranged lengthwise in parallel within said beam and having a transversal distance between said fibres in at least two different transversal directions;
wherein said optical fibres (7) comprise a plurality of sensor regions distributed along said optical fibres,
wherein each said sensor region comprises an optical fibre strain sensor in each of the optical fibres, **characterised by**
means for slidably coupling the beam to the structure to be measured.

2. Device according to the previous claim comprising one or more slidable fittings for slidably coupling the beam to the structure to be measured.

3. Device according to any of the previous claims comprising a conduit for rigidly mounting onto the structure (2) to be measured, wherein the beam is slidably mounted inside the conduit.

4. Device according to any of the previous claims wherein the beam has a rectangular or quadrangular cross-section and device comprises four said optical fibres (7) arranged in parallel within said beam forming a rectangle-shaped or a square-shaped optical fibre cross-section.

5. Device according to any of the previous claims wherein the device comprises three said optical fibres arranged in parallel within said beam to sense deflection of the beam along a first direction, deflection of the beam along a second direction perpendicular to the first direction, and temperature.

6. Device according to any of the previous claims wherein the device comprises four said optical fibres arranged in parallel within said beam to sense deflection of the beam along a first direction, deflection of the beam along a second direction perpendicular to the first direction, torsion of the beam, and temperature.

7. Device according to any of the previous claims wherein the pliant beam (6) comprises a plurality of parallel recesses along the length of said pliant beam, each recess for receiving one of the optical fibres, preferably wherein each optical fibre is embedded in a recess at a predetermined recess depth and fixed with an adhesive resin.

8. Wind turbine blade or wind turbine tower comprising the device according to any of the previous claims, wherein the structure (2) to be measured is the wind turbine blade or wind turbine tower.

9. Wind turbine blade according to the previous claim wherein the device is installed inside the blade or mounted outside the blade, in particular on the trailing edge of the blade.

10. Method for measuring a three-dimensional shape of a structure by using a device slidably coupled to the structure such that the deformation of the structure, except lengthening or shortening, causes a corresponding deformation of the device, the device comprising:
a pliant beam (6);
three or more optical fibres (7) arranged lengthwise in parallel within said beam and having a transversal distance between said fibres in at least two different transversal directions;
wherein said optical fibres (7) comprise a plurality of sensor regions distributed along said optical fibres,
wherein each said sensor region comprises an optical fibre strain sensor in each of the optical fibres;
the method comprising the steps of:
determining the amounts of deflection, or deflection and torsion, in each said sensor region;
extrapolating the three-dimensional shape of the beam from the determined amounts;
using the extrapolated three-dimensional shape as the measured three-dimensional shape of the structure, **characterised in that**
the device additionally comprises means for slidably coupling the beam to the structure to be measured.

11. Method according to the claim 10 comprising the previous application of one or more slidable fittings to the structure for slidably coupling the beam to the structure to be measured.

12. Method according to any of the claims 10-11 comprising the previous rigidly mounting of a conduit onto the structure (2) to be measured, wherein the beam is subsequently slidably arranged inside the conduit.

13. Method according to any of the claims 10-12 wherein the beam has a rectangular or quadrangular cross-section and device comprises four said optical fibres arranged in parallel within said beam forming a rectangle-shaped or a square-shaped optical fibre cross-section.

## Patentansprüche

1. Vorrichtung zum Messen einer dreidimensionalen Form einer Struktur, indem diese verschiebbar mit der Struktur verbunden ist, sodass die Verformung der Struktur eine entsprechende Verformung der Vorrichtung bewirkt, mit Ausnahme einer Verlängerung oder Verkürzung, umfassend:
eine biegsame Stange (6);
drei oder mehr optische Fasern (7), die in Längsrichtung parallel innerhalb der genannten Stange angeordnet sind und einen Querabstand zwischen den genannten Fasern in mindestens zwei verschiedenen Querrichtungen aufweisen;
wobei die genannten optischen Fasern (7) eine Vielzahl von Sensorbereichen umfassen, die entlang der genannten optischen Fasern verteilt sind,
wobei jeder genannte Sensorbereich einen optischen Sensor für die Faserdehnung in jeder der optischen Fasern umfasst, **dadurch gekennzeichnet, dass** er Mittel für eine verschiebbare Verbindung der Stange mit der zu messende Struktur umfasst.

2. Vorrichtung nach dem vorangehenden Anspruch, umfassend eine oder mehrere verschiebbare Formstücke für eine verschiebbare Verbindung der Stange mit der zu messenden Struktur.

3. Vorrichtung nach einem der vorangehenden Ansprüche, umfassend ein Rohr für eine starre Befestigung mit der zu messenden Struktur (2), wobei die Stange innerhalb des Rohrs verschiebbar angebracht ist.

4. Vorrichtung nach einem der vorangehenden Ansprüche, wobei die Stange einen rechteckigen oder viereckigen Querschnitt hat und die Vorrichtung vier der genannten optischen Fasern (7) umfasst, die parallel innerhalb der genannten Stange angeordnet sind und einen rechteckigen oder quadratischen Querschnitt der optischen Faser bilden.

5. Vorrichtung nach einem der vorangehenden Ansprüche, wobei die Vorrichtung drei der genannten optischen Fasern umfasst, die parallel innerhalb der genannten Stange angeordnet sind, um die Abweichung der Stange entlang einer ersten Richtung, die Abweichung der Stange entlang einer zweiten Richtung senkrecht zu der ersten Richtung und die Temperatur zu erfassen.

6. Vorrichtung nach einem der vorangehenden Ansprüche, wobei die Vorrichtung vier der genannten optischen Fasern umfasst, die parallel innerhalb der genannten Stange angeordnet sind, um die Abweichung der Stange entlang einer ersten Richtung, die Abweichung der Stange entlang einer zweiten Richtung senkrecht zu der ersten Richtung, die Torsion der Stange und die Temperatur zu erfassen.

7. Vorrichtung nach einem der vorangehenden Ansprüche, wobei die biegsame Stange (6) eine Vielzahl paralleler Aussparungen entlang der Länge der genannten biegsamen Stange aufweist, wobei jede Aussparung zur Aufnahme einer der optischen Fasern dient, wobei jede optische Faser bevorzugt in eine Aussparung mit einer vorbestimmten Aussparungstiefe eingebettet und mit einem Harzklebstoff befestigt ist.

8. Windturbinenschaufel oder Turm einer Windkraftanlage, umfassend die Vorrichtung nach einem der vorangehenden Ansprüche, wobei die zu messende Struktur (2) die Windturbinenschaufel oder der Turm der Windkraftanlage ist.

9. Windturbinenschaufel nach dem vorangehenden Anspruch, wobei die Vorrichtung innerhalb oder außerhalb der Schaufel, insbesondere an der Hinterkante der Schaufel, angebracht ist.

10. Verfahren zum Messen einer dreidimensionalen Form einer Struktur unter Verwendung einer verschiebbar mit der Struktur verbundenen Vorrichtung, so dass die Verformung der Struktur, mit Ausnahme einer Verlängerung oder Verkürzung, eine entsprechende Verformung der Vorrichtung verursacht, wobei die Vorrichtung umfasst:
eine biegsame Stange (6);
drei oder mehr optische Fasern (7), die in Längsrichtung parallel innerhalb der genannten Stange angeordnet sind und einen Querabstand zwischen den genannten Fasern in mindestens zwei verschiedenen Querrichtungen aufweisen;
wobei die genannten optischen Fasern (7) eine Vielzahl von Sensorbereichen umfassen, die entlang der genannten optischen Fasern verteilt sind,
wobei jeder genannte Sensorbereich einen faseroptischen Dehnungssensor in jeder der optischen Fasern umfasst;
wobei das Verfahren folgende Schritte umfasst:
Bestimmen der Anzahl der Abweichungen oder der Abweichung und der Torsion in jedem der genannten Sensorbereiche;
Extrapolieren der dreidimensionalen Form der Stange aus den ermittelten Werten;
Verwenden der extrapolierten dreidimensionalen Form als die gemessene dreidimensionale Form der Struktur, **dadurch gekennzeichnet, dass** die Vorrichtung zusätzlich Mittel zur verschiebbaren Verbindung der Stange mit der zu messenden Struktur umfasst.

11. Verfahren nach Anspruch 10, umfassend das vorherige Anbringen eines oder mehrerer verschiebbarer Formstücke an der Struktur, um die Stange verschiebbar mit der zu messenden Struktur zu verbinden.

12. Verfahren nach einem der Ansprüche 10-11, bei dem zuvor ein Rohr starr an der zu messenden Struktur (2) angebracht wird, wobei die Stange anschließend verschiebbar in dem Rohr angeordnet wird.

13. Verfahren nach einem der Ansprüche 10-12, bei dem die Stange einen rechteckigen oder viereckigen Querschnitt aufweist und die Vorrichtung vier der genannten, parallel in der genannten Stange angeordnete optische Fasern umfasst, die einen rechteckigen oder quadratischen Querschnitt der optischen Faser bilden.

## Revendications

1. Dispositif de mesure de la forme tridimensionnelle d'une structure par accouplement de manière coulissante à la structure tel que la déformation de la structure, sauf le rallongement ou le raccourcissement, cause une déformation correspondante du dispositif, comprenant :
une poutre souple (6) ;
trois ou plus de fibres optiques (7) arrangées longitudinalement de manière parallèle au sein de ladite poutre et ayant une distance transversale entre lesdites fibres dans au moins deux directions transversales différentes ;
dans lequel lesdites fibres optiques (7) comprennent une pluralité de régions de capteur distribuées le long desdites fibres optiques ;
dans lequel chacune desdites régions de capteur comprend un capteur de contrainte de fibre optique dans chacune des fibres optiques, **caractérisé par** des moyens d'accouplement de manière coulissante de la poutre à la structure devant être mesurée.

2. Dispositif selon la revendication précédente comprenant un ou plusieurs raccords coulissants pour accoupler de manière coulissante la poutre à la structure devant être mesurée.

3. Dispositif selon l'une quelconque des revendications précédentes comprenant une conduite à monter de manière rigide sur la structure (2) devant être mesurée, dans lequel la poutre est montée de manière coulissante à l'intérieur de la conduite.

4. Dispositif selon l'une quelconque des revendications précédentes dans lequel la poutre a une section transversale rectangulaire ou quadrangulaire et le dispositif comprend quatre desdites fibres optiques (7) arrangées de manière parallèle au sein de ladite poutre formant une section transversale de fibre optique en forme de rectangle ou de carré.

5. Dispositif selon l'une quelconque des revendications précédentes dans lequel le dispositif comprend trois desdites fibres optiques arrangées de manière parallèle au sein de ladite poutre pour capter la déviation de la poutre le long d'une première direction, la déviation de la poutre le long d'une seconde direction perpendiculaire à la première direction, et la température.

6. Dispositif selon l'une quelconque des revendications précédentes dans lequel le dispositif comprend quatre desdites fibres optiques arrangées de manière parallèle au sein de ladite poutre afin de capter la déviation de la poutre le long d'une première direction, la déviation de la poutre le long d'une seconde direction perpendiculaire à la première direction, la torsion de la poutre, et la température.

7. Dispositif selon l'une quelconque des revendications précédentes dans lequel la poutre souple (6) comprend une pluralité de renfoncements parallèles le long de ladite poutre souple, chaque renfoncement étant destiné à recevoir une des fibres optiques, préférablement dans lequel chaque fibre optique est intégrée dans un renfoncement à une profondeur de renfoncement prédéterminée et fixée avec une résine adhésive.

8. Pale d'éolienne ou tour d'éolienne comprenant le dispositif selon l'une quelconque des revendications précédentes, dans laquelle la structure (2) devant être mesurée est la pale d'éolienne ou la tour d'éolienne.

9. Pale d'éolienne selon la revendication précédente dans laquelle le dispositif est installé à l'intérieur de la pale ou monté à l'extérieur de la pale, en particulier sur le bord de fuite de la pale.

10. Procédé de mesure de la forme tridimensionnelle d'une structure en utilisant un dispositif accouplé de manière coulissante à la structure tel que la déformation de la structure, sauf le rallongement ou le raccourcissement, cause une déformation correspondante du dispositif, le dispositif comprenant :
une poutre souple (6) ;
trois ou plus de fibres optiques (7) arrangées longitudinalement de manière parallèle au sein de ladite poutre et ayant une distance transversale entre lesdites fibres dans au moins deux directions transversales différentes ;
dans lequel lesdites fibres optiques (7) comprennent une pluralité de régions de capteur distribuées le long desdites fibres optiques,
dans lequel chacune desdites régions de capteur comprend un capteur de contrainte de fibre optique dans chacune des fibres optiques ;
le procédé comprenant les étapes consistant à :
déterminer les quantités de déviation, ou de déviation et de torsion, dans chacune desdites régions de capteur ;
extrapoler la forme tridimensionnelle de la poutre à partir des quantités déterminées ;
utiliser la forme tridimensionnelle extrapolée en tant que forme tridimensionnelle mesurée de la structure, **caractérisé en ce que** le dispositif comprend également des moyens pour accoupler de manière coulissante la poutre à la structure devant être mesurée.

11. Procédé selon la revendication 10 comprenant l'application préalable d'un ou de plusieurs raccords coulissants à la structure pour accoupler de manière coulissante la poutre à la structure devant être mesurée.

12. Procédé selon l'une quelconque des revendications 10-11 comprenant le montage préalable de manière rigide d'une conduite sur la structure (2) devant être mesurée, dans lequel la poutre est par la suite arrangée de manière coulissante à l'intérieur de la conduite.

13. Procédé selon l'une quelconque des revendications 10-12 dans lequel la poutre a une section transversale rectangulaire ou quadrangulaire et le dispositif comprend quatre desdites fibres optiques arrangées de manière parallèle au sein de ladite poutre formant une section transversale de fibre optique en forme de rectangle ou de carré.
